(19) Europäisches Patentamt
European Patent Office
Office européen des brevets

(11) EP 2 928 956 B1

(12) **EUROPÄISCHE PATENTSCHRIFT**

(45) Veröffentlichungstag und Bekanntmachung des Hinweises auf die Patenterteilung:
**25.09.2019 Patentblatt 2019/39**

(21) Anmeldenummer: **13814455.5**

(22) Anmeldetag: **04.12.2013**

(51) Int Cl.:
***C08K 5/5399*** *(2006.01)* ***C08L 69/00*** *(2006.01)*

(86) Internationale Anmeldenummer:
**PCT/EP2013/075490**

(87) Internationale Veröffentlichungsnummer:
**WO 2014/086832 (12.06.2014 Gazette 2014/24)**

(54) **FLAMMGESCHÜTZTE POLYCARBONATFORMMASSEN III**

FLAME-PROTECTED POLYCARBONATE MOULDED SUBSTANCES III

MASSES DE FORMAGE EN POLYCARBONATE IGNIFUGÉS III

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.12.2012 EP 12196019**

(43) Veröffentlichungstag der Anmeldung:
**14.10.2015 Patentblatt 2015/42**

(73) Patentinhaber: **Covestro Deutschland AG**
**51373 Leverkusen (DE)**

(72) Erfinder:
- **JUNG, Mathieu**
  **200031 Shanghai (CN)**
- **ECKEL, Thomas**
  **41540 Dormagen (DE)**
- **HOBEIKA, Sven**
  **42699 Solingen (DE)**

(74) Vertreter: **Levpat**
**c/o Covestro AG**
**Gebäude 4825**
**51365 Leverkusen (DE)**

(56) Entgegenhaltungen:
**EP-A2- 0 728 811**
**DE-B4- 10 393 198**
**JP-A- 2000 351 893**
**US-A1- 2003 040 643**
**US-A1- 2003 092 802**

- **DATABASE WPI Week 200131 Thomson Scientific, London, GB; AN 2001-293898 XP002695686, & JP 2000 351893 A (MITSUBISHI ENG PLASTICS KK) 19. Dezember 2000 (2000-12-19)**

Bemerkungen:
Die Akte enthält technische Angaben, die nach dem Eingang der Anmeldung eingereicht wurden und die nicht in dieser Patentschrift enthalten sind.

EP 2 928 956 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft flammgeschützte, schlagzähmodifizierte Polycarbonat (PC)-Zusammensetzungen mit cyclischen Phosphazenen, die eine hohe Chemikalienbeständigkeit und hohe Hydrolysestabilität aufweisen, sowie Verfahren zu ihrer Herstellung und die Verwendung von cyclischen Phosphazenen als Flammschutzmittel in Polycarbonatzusammensetzungen.

EP 1 095 099 A1 beschreibt mit Phosphazenen und Phosphorverbindungen ausgerüstete Polycarbonat-ABS-Formmassen, die einen ausgezeichneten Flammschutz und sehr gute mechanische Eigenschaften wie Bindenahtfestigkeit oder Kerbschlagzähigkeit aufweisen

EP 1 196 498 A1 beschreibt mit Phosphazenen ausgerüstete Formmassen auf Basis Polycarbonat und Pfropfpolymerisaten ausgewählt aus der Gruppe der Silikon-, EP(D)M- und Acrylatkautschuke als Pfropfgrundlage, die einen ausgezeichneten Flammschutz und sehr gute mechanische Eigenschaften wie Spannungsrissbeständigkeit oder Kerbschlagzähigkeit aufweisen

EP 1 095 100 A1 beschreibt Polycarbonat/ABS-Formmassen, enthaltend Phosphazene und anorganische Nanopartikel, die einen ausgezeichneten Flammschutz und sehr gute mechanische Eigenschaften aufweisen EP 1 095 097 A1 beschreibt mit Phosphazenen ausgerüstete Polycarbonat-ABS-Formmassen, die einen ausgezeichneten Flammschutz und sehr gute Verarbeitungseigenschaften aufweisen, wobei das Propfpolymerisat mittels Masse-, Lösungs- oder Masse-Suspensions-Polymerisationsverfahren hergestellt wird.

US2003/040643 A1 beschreibt einen Prozess zur Herstellung von Phenoxyphosphazen sowie Polycarbonat-ABS Formmassen enthaltend diese Phenoxyphosphazene. Die Formmassen weisen einen guten Flammschutz, gute Fließfähigkeit, gute Schlagzähigkeit und hohe Wärmeformbeständigkeit auf.

EP 0728811 A2 offenbart Polycarbonat-ABS-Formmassen mit Phosphazen als Flammschutzmittel. Die Formmassen weisen einen guten Flammschutz, hohe Schlagzähigkeit, hohe Schmelzevolumenfließrate und einen hohen Biegemodul auf.

JP 2000 351893 offenbart schlagzähmodifierte Polycrabonat-Formmassen mit Phosphazenen., die sich durch eine gute Hydrolysebeständigkeit, guten Flammschutz und Stabilität der elektrischen Eigenschaften auszeichnen.

In den oben genannten Dokumenten werden lineare und cyclische Phosphazene offenbart. Bei den cyclischen Phosphazenen werden die Anteile von Trimeren, Tetrameren und höheren Oligomeren jedoch nicht spezifiziert,

US2003/092802 A1 offenbart Phenoxyphosphazene sowie deren Herstellung und Verwendung in Polycarbonat-ABS Formmassen. Die Phenoxyphosphazene sind bevorzugt vernetzt und die Formmassen zeichnen sich durch guten Flammschutz, gute Schlagzähigkeit, hohen Biegemodul und hohe Schmelzevolumenfließrate aus. Das verwendete ABS ist nicht genauer beschrieben. Darüber hinaus werden in diesem Dokument die Anteile von Trimeren, Tetrameren und höheren Oligmeren der vorliegenden Anmeldung nicht beschrieben.

JP 2004 155802 offenbart cyclische Phosphazene und deren Anwendung in thermoplastischen Formmassen wie Polycarbonat und ABS. Polycarbonat-ABS-Formmassen mit cyclischen Phosphazenen mit genau definierten Anteilen von Trimeren, Tetrameren und höheren Oligomeren werden nicht offenbart.

JP 1995 0038462 beschreibt Polycarbonat-Zusammensetzungen, enthaltend Pfropfpolymere, Phosphazene als Flammschutzmittel und optional Vinylcopolymere. Spezifische Strukturen, Zusammensetzungen und Mengen des Flammschutzmittels werden jedoch nicht genannt.

JP 19990176718 beschreibt thermoplastische Zusammensetzungen bestehend aus aromatischem Polycarbonat, Copolymer aus aromatischen Vinylmonomeren und Vinylcyaniden, Pfropfpolymer aus Alkyl(meth)acrylaten und Kautschuk und Phosphazen als Flammschutzmittel, die eine gute Fließfähigkeit aufweisen.

Aufgabe der vorliegenden Erfindung ist somit die Bereitstellung einer flammgeschützten Formmasse, die sich durch eine Eigenschaftskombination aus hoher Hydrolysestabilität, hoher Chemikalienbeständigkeit (ESC-Verhalten) und hohem E-Modul bei gleichbleibend guten mechanischen Eigenschaften auszeichnet.

Ferner ist es Aufgabe der Erfindung, flammgeschützte Formmassen bereitzustellen, die bei gutem Flammschutz nur einen geringen Phosphazengehalt aufweisen, da Flammschutzmittel ein wesentlicher Kostenfaktor bei der Herstellung dieser Zusammensetzungen sind, so dass diese kostengünstiger werden.

Bevorzugt sind die Formmassen flammwidrig und erfüllen die Anforderungen UL94 mit V-0 auch bei dünnen Wandstärken (d.h. Wandstärke von 1,5 mm).

Es wurde überraschend gefunden, dass Zusammensetzungen gemäß Anspruch 1 enthaltend

A) 60 - 95 Gew.-Teile, bevorzugt 65 - 90 Gew.-Teile, weiter bevorzugt 70 - 85 Gew.Teile, besonders bevorzugt 76 - 88 Gew.-Teile, aromatisches Polycarbonat und/oder aromatisches Polyestercarbonat,

B) 1,0 - 15,0 Gew.-Teile, bevorzugt 3,0 - 12,5 Gew.-Teile, besonders bevorzugt 4,0 - 10,0 Gew.-Teile, kautschukmodifiziertes Pfropfpolymerisat,

C) 1,0 - 14,5 Gew.-Teile, bevorzugt 1,5 - 9,0 Gew.-Teile, weiter bevorzugt 2,0 - 8,0 Gew.-Teile, besonders bevorzugt 4,5 - 8,0 Gew.-Teile, mindestens eines cyclischen Phosphazens der Struktur (X),

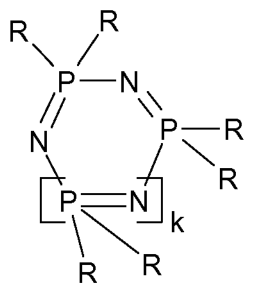

(X),

wobei

k für 1 oder eine ganze Zahl von 1 bis 10, vorzugsweise für eine Zahl von 1 bis 8, besonders bevorzugt 1 bis 5, steht,

wobei der Trimerenanteil (k=1) von 65 bis 85 mol.-%, der Tetramerenanteil (k=2) von 10 bis 20 mol.-%, der Anteil an höheren oligomeren Phosphazene (k=3,4,5,6 und 7) von 5 bis 15 mol.-%, und der Anteil an Phosphazen-Oligomere mit k>=8 von 0 bis 1 mol.-%, jeweils bezogen auf die Komponente C, beträgt
und wobei

R jeweils gleich oder verschieden ist und für einen Aminrest, jeweils, gegebenenfalls halogeniertes, vorzugsweise mit Fluor halogeniertes, $C_1$- bis $C_8$-Alkyl, vorzugsweise Methyl, Ethyl, Propyl oder Butyl, $C_1$- bis $C_8$- Alkoxy, vorzugsweise Methoxy, Ethoxy, Propoxy oder Butoxy, jeweils gegebenenfalls durch Alkyl, vorzugsweise $C_1$-$C_4$-Alkyl, und/oder Halogen, vorzugsweise Chlor und/oder Brom, substituiertes $C_5$- bis $C_6$-Cycloalkyl, jeweils gegebenenfalls durch Alkyl, vorzugsweise $C_1$-$C_4$-Alkyl, und/oder Halogen, vorzugsweise Chlor, Brom und/oder Hydroxy-substituiertes, $C_6$- bis $C_{20}$-Aryloxy, vorzugsweise Phenoxy, Naphthyloxy, jeweils gegebenenfalls durch Alkyl, vorzugsweise $C_1$-$C_4$-Alkyl, und/oder Halogen, vorzugsweise Chlor und/oder Brom, substituiertes $C_7$- bis $C_{12}$-Aralkyl, vorzugsweise Phenyl-$C_1$-$C_4$-alkyl, oder einen Halogen-Rest, vorzugsweise Chlor, oder einen OH-Rest steht.

D) 0 - 15,0 Gew.-Teile, bevorzugt 2,0 - 12,5 Gew.-Teile, weiter bevorzugt von 3,0 - 9,0 Gew.-Teile, besonders bevorzugt 3,0 - 6,0 Gew.-Teile kautschukfreies Vinyl(Co)Polymerisat oder Polyalkylenterephthalat,
E) 0 - 15,0 Gew.-Teile, bevorzugt von 0,05 - 15,00 Gew.-Teile, weiter bevorzugt 0,2 - 10,0 Gew.-Teile, besonders bevorzugt 0,4 - 5,0 Gew.-Teile Additive ausgewählt aus der Gruppe, die Gleit- und Entformungsmittel, Nukleiermittel, Stabilisatoren, Antistatika, Farbstoffe, Pigmente, Füll- und Verstärkungsstoffe sowie Flammschutzsynergisten außer Antidrippingmittel umfasst,
F) 0,05 bis 5,00 Gew.-Teilen, vorzugsweise 0,1 bis 2,0 Gew.-Teile, besonders bevorzugt 0,1 bis 1,0 Gew.-Teilen Antidrippingmittel.

wobei alle Gewichtsteilangaben vorzugsweise in der vorliegenden Anmeldung so normiert sind, dass die Summe der Gewichtsteile aller Komponenten A+B+C+D+E+F in der Zusammensetzung 100 ergeben.

In einer bevorzugten Ausführungsform besteht die Zusammensetzung nur aus den Komponenten A bis F.

In einer bevorzugten Ausführungsform ist die Zusammensetzung frei von anorganischen Flammschutzmitteln und Flammschutzsynergisten, insbesondere Aluminiumhydroxid, Aluminiumoxidhydroxid sowie Arsen- und Antimonoxiden.

In einer bevorzugten Ausführungsform ist die Zusammensetzung frei von weiteren organischen Flammschutzmitteln, insbesondere Bisphenol-A-diphosphat-Oligomeren, Resorcinoldiphosphat-Oligomeren, Triphenylphosphat, Octamethyl-Resorcinoldiphosphat und Tetrabrom-Bisphenol-A-Diphosphat-Oligocarbonat.

Die bevorzugten Ausführungsformen können einzeln stehen oder auch miteinanderverknüpft ausgeführt werden.

Gegenstand der Erfindung sind ebenfalls Verfahren zur Herstellung der Formmassen und die Verwendung der Formmassen zur Herstellung von Formkörpern sowie die Verwendung von cyclischen Phosphazenen mit definierter Oligomerenverteilung zur Herstellung der erfindungsgemäßen Zusammensetzungen.

Die erfindungsgemäßen Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten,

Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen sowie Karosserie- bzw. Innenbauteile für Nutzfahrzeuge, insbesondere für den Automobilbereich.

Insbesondere können die erfindungsgemäßen Formmassen beispielsweise auch zur Herstellung von folgenden Formkörpern oder Formteilen verwendet werden: Innenausbauteile für Schienenfahrzeuge, Schiffe, Flugzeuge, Busse und andere Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Gehäuse für Sicherheitseinrichtungen, Formteile für Sanitär- und Badausrüstungen, Abdeckgitter für Lüfteröffnungen und Gehäuse für Gartengeräte.

Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 007 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I)

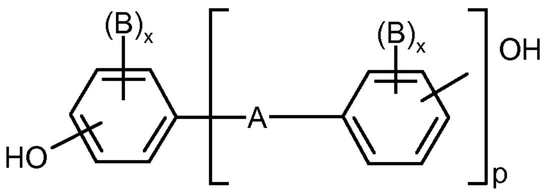

(I),

wobei

A eine Einfachbindung, $C_1$ bis $C_5$-Alkylen, $C_2$ bis $C_5$-Alkyliden, $C_5$ bis $C_6$-Cycloalkyliden,-O-, -SO-, -CO-, -S-, -$SO_2$-, $C_6$ bis $C_{12}$-Arylen, an das weitere aromatische gegebenenfalls Heteroatome enthaltende Ringe kondensiert sein können, oder ein Rest der Formel (II) oder (III)

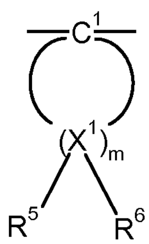

(II)

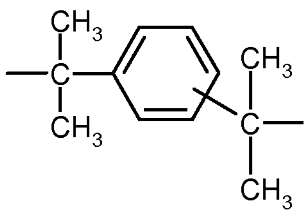

(III)

B jeweils $C_1$ bis $C_{12}$-Alkyl, vorzugsweise Methyl, Halogen, vorzugsweise Chlor und/oder Brom

x jeweils unabhängig voneinander 0, 1 oder 2,
p 1 oder 0 sind, und
$R^5$ und $R^6$ für jedes $X^1$ individuell wählbar, unabhängig voneinander Wasserstoff oder $C_1$ bis $C_6$-Alkyl, vorzugsweise Wasserstoff, Methyl oder Ethyl,
$X^1$ Kohlenstoff und
m eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha$, $\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A). Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenole oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Molekulargewichte (Gewichtsmittel $M_w$, gemessen durch GPC (Gelpermeationschromatographie) mit Polycarbonatstandard) von 15.000 bis 80.000 g/mol, vorzugsweise 19.000 bis 32.000 g/mol, besonders bevorzugt 22.000 bis 30.000 g/mol.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen. Bevorzugt werden lineare Polycarbonate, weiter bevorzugt auf Basis von Bisphenol-A, eingesetzt.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Bei der Herstellung von aromatischen Polyestercarbonaten können zusätzlich eine oder mehrere aromatische Hydroxycarbonsäuren eingesetzt werden.

Die aromatischen Polyestercarbonate können sowohl linear als auch in bekannter Weise verzweigt sein (siehe dazu DE-A 2 940 024 und DE-A 3 007 934), wobei lineare Polyestercarbonate bevorzugt sind.

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl] -propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt werden; Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen Gemisch eingesetzt werden.

Komponente B

Die Pfropfpolymerisate B umfassen z.B. Pfropfpolymerisate mit kautschukelastischen Eigenschaften, die im Wesentlichen aus mindestens 2 der folgenden Monomeren erhältlich sind: Chloropren, Butadien-1,3, Isopren, Styrol, Acrylnitril, Ethylen, Propylen, Vinylacetat und (Meth-)Acrylsäureester mit 1 bis 18 C-Atomen in der Alkoholkomponente; also Polymerisate, wie sie z.B. in "Methoden der Organischen Chemie" (Houben-Weyl), Bd. 14/1, Georg Thieme-Verlag, Stuttgart 1961, S. 393-406 und in C.B. Bucknall, "Toughened Plastics", Appl. Science Publishers, London 1977, beschrieben sind.

Besonders bevorzugte Polymerisate B sind beispielsweise ABS-Polymerisate (Emulsions-, Masse- und Suspensions-ABS), wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Die Pfropfcopolymerisate B werden durch radikalische Polymerisation, z.B. durch Emulsions-, Suspensions-, Lösungs- oder Massepolymerisation, vorzugsweise durch Emulsions- oder Massepolymerisation hergestellt.

Bevorzugte Polymerisate B sind partiell vernetzt und besitzen Gelgehalte (gemessen in Toluol) von über 20 Gew.-%, vorzugsweise über 40 Gew.-%, insbesondere über 60 Gew.-%.

Der Gelgehalt wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Bevorzugte Pfropfpolymerisate B umfassen Pfropfpolymerisate aus:

B.1) 5 bis 95, vorzugsweise 30 bis 80 Gew.-Teile, einer Mischung aus

B.1.1) 50 bis 95 Gew.-Teilen Styrol, α-Methylstyrol, methylkernsubstituiertem Styrol, $C_1$-$C_8$-Alkylmethacrylat, insbesondere Methylmethacrylat, $C_1$-$C_8$-Alkylacrylat, insbesondere Methylacrylat, oder Mischungen dieser Verbindungen und

B.1.2) 5 bis 5 0 Gew.-Teilen Acrylnitril, Methacrylnitril $C_1$-$C_8$-Alkylmethacrylaten, insbesondere Methylmethacrylat, $C_1$-$C_8$-Alkylacrylat, insbesondere Methylacrylat, Maleinsäureanhydrid, $C_1$-$C_4$-alkyl- bzw. -phenyl-N-substituierte Maleinimide oder Mischungen dieser Verbindungen auf

B.2) 5 bis 95, vorzugsweise 20 bis 70 Gew.-Teilen einer kautschukhaltigen Pfropfgrundlage.

Vorzugsweise hat die Pfropfgrundlage eine Glasübergangstemperatur unter -10°C.

Glasübergangstemperaturen werden, soweit in der vorliegenden Erfindung nicht anders angegeben, mittels dynamischer Differenzkalorimetrie (DSC) gemäß der Norm DIN EN 61006 bei einer Heizrate von 10 K/min mit Definition der Tg als Mittelpunkttemperatur (Tangentenmethode) und Stickstoff als Schutzgas bestimmt.

Besonders bevorzugt ist eine Pfropfgrundlage auf Basis eines Polybutadienkautschuks.

Bevorzugte Pfropfpolymerisate B sind z.B. mit Styrol und/oder Acrylnitril und/oder (Meth-)Acrylsäurealkylestern gepfropfte Polybutadiene, Butadien/Styrol-Copolymerisate und Acrylatkautschuke; d.h. Copolymerisate der in der DE-OS 1 694 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (= US-PS 3 919 353) beschrieben sind.

Besonders bevorzuge Pfropfpolymerisate B sind Pfropfpolymerisate, die durch Pfropfreaktion von

I. 10 bis 70, vorzugsweise 15 bis 50, insbesondere 20 bis 40 Gew.-%, bezogen auf Pfropfprodukt, mindestens eines (Meth-)Acrylsäureesters oder 10 bis 70, vorzugsweise 15 bis 50, insbesondere 20 bis 40 Gew.-% eines Gemisches aus 10 bis 50, vorzugsweise 20 bis 35 Gew.-%, bezogen auf Gemisch, Acrylnitril oder (Meth-)Acrylsäureester und 50 bis 90, vorzugsweise 65 bis 80 Gew.-%, bezogen auf Gemisch, Styrol auf

II. 30 bis 90, vorzugsweise 40 bis 85, insbesondere 50 bis 80 Gew.-%, bezogen auf Pfropfprodukt, eines Butadien-Polymerisats mit mindestens 50 Gew.-%, bezogen auf II, Butadienresten als Pfropfgrundlage.

erhältlich sind.

Erfindungsgemäß ganz besonders bevorzugt wird als Pfropfpolymer ABS (Acrylnitril-Butadien-Styrol) eingesetzt.

Der Gelanteil dieser Pfropfgrundlage II beträgt vorzugsweise mindestens 70 Gew.-% (in Toluol gemessen), der Pfropfgrad G 0,15 bis 0,55 und der mittlere Teilchendurchmesser $d_{50}$ des Pfropfpolymerisats B 0,05 bis 2, vorzugsweise 0,1 bis 0,6 $\mu$m.

(Meth-)Acrylsäureester I sind Ester der Acrylsäure oder Methacrylsäure und einwertiger Alkohole mit 1 bis 18 C-Atomen. Besonders bevorzugt sind Methacrylsäuremethylester, -ethylester und -propylester.

Die Pfropfgrundlage II kann neben Butadienresten bis zu 50 Gew.-%, bezogen auf II, Reste anderer ethylenisch ungesättigter Monomerer, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Die bevorzugte Pfropfgrundlage II besteht aus reinem Polybutadien.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch Polymerisation der Pfropfmonomeren in Gegenwart der Pfropfgrundlage gewonnen werden.

Der Pfropfgrad G bezeichnet das Gewichtsverhältnis von aufgepfropften Pfropfmonomeren zur Pfropfgrundlage und ist dimensionslos.

Die mittlere Teilchengröße $d_{50}$ ist der Durchmesser, oberhalb und unterhalb dessen jeweils 50 Gew.-% der Teilchen liegen. Er kann mittels Ultrazentrifugenmessungen (W. Scholtan, H. Lange, Kolloid, Z. und Z. Polymere 250 (1972), 782-796) bestimmt werden.

Weitere bevorzugte Pfropfpolymerisate B sind z.B. auch Pfropfpolymerisate aus

(a) 20 bis 90 Gew.-%, bezogen auf B, Acrylatkautschuk als Pfropfgrundlage und

(b) 10 bis 80 Gew.-%, bezogen auf B, mindestens eines polymerisierbaren, ethylenisch ungesättigten Monomeren, dessen bzw. deren in Abwesenheit von a) entstandenen Homo- bzw. Copolymerisate eine Glasübergangstemperatur über 25°C hätten, als Pfropfmonomere.

Die Pfropfgrundlage aus Acrylatkautschuk hat bevorzugt eine Glasübergangstemperatur von kleiner als -20°C, vorzugsweise kleiner -30°C.

Die Acrylatkautschuke (a) der Polymerisate B sind vorzugsweise Polymerisate aus Acrylsäurealkylestern, gegebenenfalls mit bis zu 40 Gew.-%, bezogen auf (a), anderer polymerisierbarer, ethylenisch ungesättigter Monomerer. Zu den bevorzugten polymerisierbaren Acrylsäureestern gehören $C_1$-$C_8$-Alkylester, beispielsweise Methyl-, Ethyl-, n-Butyl-, n-Octyl- und 2-Ethylhexylester sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomeren Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf Pfropfgrundlage (a).

Bei cyclischen vernetzenden Monomeren mit mindestens 3 ethylenisch ungesättigten Gruppen ist es vorteilhaft, die Menge auf unter 1 Gew.-% der Pfropfgrundlage (a) zu beschränken.

Bevorzugte "andere" polymerisierbare, ethylenisch ungesättigte Monomere, die neben den Acrylsäureestern gegebenenfalls zur Herstellung der Pfropfgrundlage (a) dienen können, sind z.B. Acrylnitril, Styrol, α-Methylstyrol, Acrylamide, Vinyl-$C_1$-$C_6$-alkylether, Methylmethacrylat, Butadien. Bevorzugte Acrylatkautschuke als Pfropfgrundlage (a) sind Emulsionspolymerisate, die einen Gelgehalt von mindestens 60 Gew.-% aufweisen.

Komponente C

Phosphazene gemäß Komponente C, welche gemäß der vorliegenden Erfindung eingesetzt werden, sind cyclische Phosphazene gemäß Formel (X)

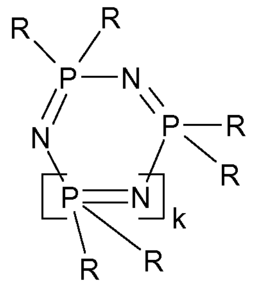

(X),

wobei

R jeweils gleich oder verschieden ist und für

- -einen Aminrest,
- -jeweils, gegebenenfalls halogeniertes, vorzugsweise mit Fluor halogeniertes, weiter bevorzugt monohalogeniertes, $C_1$- bis $C_8$-Alkyl, vorzugsweise Methyl, Ethyl, Propyl oder Butyl,
- -$C_1$- bis $C_8$- Alkoxy, vorzugsweise Methoxy, Ethoxy, Propoxy oder Butoxy,
- -jeweils gegebenenfalls durch Alkyl, vorzugsweise $C_1$-$C_4$-Alkyl, und/oder Halogen, vorzugsweise Chlor und/oder Brom, substituiertes $C_5$- bis $C_6$-Cycloalkyl,
- -jeweils gegebenenfalls durch Alkyl, vorzugsweise $C_1$-$C_4$-Alkyl, und/oder Halogen, vorzugsweise Chlor, Brom und/oder Hydroxy-substituiertes, $C_6$- bis $C_{20}$-Aryloxy, vorzugsweise Phenoxy, Naphthyloxy,
- -jeweils gegebenenfalls durch Alkyl, vorzugsweise $C_1$-$C_4$-Alkyl, und/oder Halogen, vorzugsweise Chlor und/oder Brom, substituiertes $C_7$- bis $C_{12}$-Aralkyl, vorzugsweise Phenyl-$C_1$-$C_4$-alkyl, oder
- -einen Halogen-Rest, vorzugsweise Chlor oder Fluor, oder
- -einen OH-Rest steht.

k die oben genannte Bedeutung hat.

Bevorzugt sind:

Propoxyphosphazen, Phenoxyphosphazen, Methylphenoxyphosphazen, Aminophosphazen und Fluoralkylphosphazene, sowie Phosphazene der folgenden Strukturen:

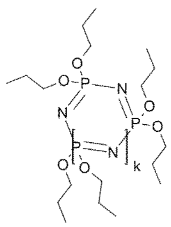

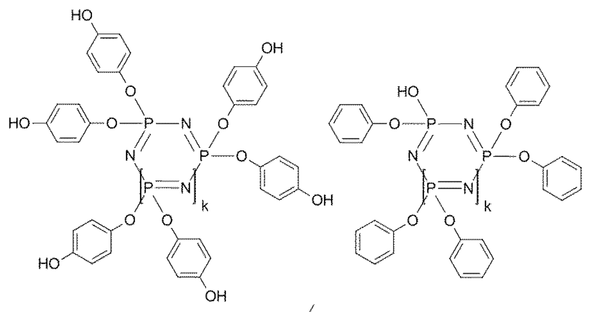

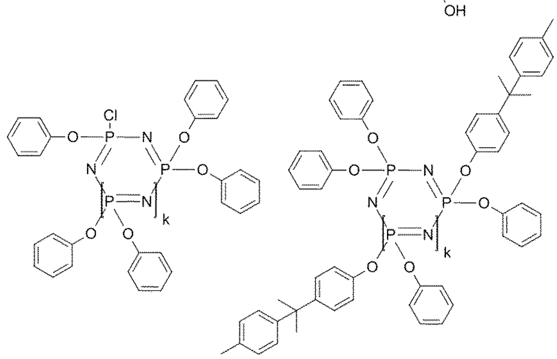

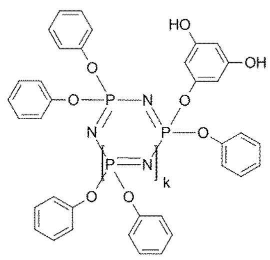

In den oben gezeigten Verbindungen ist k = 1, 2 oder 3. Bevorzugt ist Phenoxyphosphazen (alle R = Phenoxy).

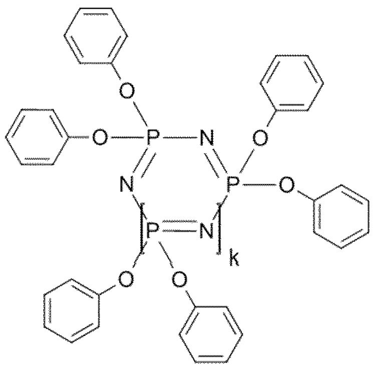

(XI)

Für den Fall, dass das Phosphazen gemäß Formel (X) am Phosphor Halogen-substitiert ist, z. B. aus unvollständig reagierten Ausgangsmaterial, ist der Anteil dieses am Phosphor Halogensubstituierten Phosphazens bevorzugt kleiner als 1000 ppm, weiter bevorzugt kleiner 500ppm.

Die Phosphazene können allein oder als Mischung eingesetzt werden, d.h. der Rest R kann gleich sein oder 2 oder mehr Reste in der Formel (X) können verschieden sein. Bevorzugt sind die Reste R eines Phosphazens identisch.

In einer weiter bevorzugten Ausführungsform werden nur Phosphazene mit gleichem R eingesetzt Besonders bevorzugt ist die Komponente C ein Phenoxyphosphazen mit einem Trimerenanteil (k=1) von 70 bis 85 mol.-%, einem Tetramerenanteil (k=2) von 10 bis 20 mol.-%, einem Anteil an höheren oligomeren Phosphazene (k=3,4,5,6 und 7) von 6 bis 15 mol.-% und Phosphazen-Oligomere mit k>= 8 von 0,1 bis 1 mol.-%, bezogen auf die Komponente C.

In einer weiteren besonders bevorzugten Ausführungsform ist die Komponente C ein Phenoxyphosphazen mit einem Trimerenanteil (k=1) von 65 bis 85 mol.-%, einem Tetramerenanteil (k=2) von 10 bis 20 mol.-%, einem Anteil an höheren oligomeren Phosphazene (k=3,4,5,6 und 7) von 5 bis 15 mol.-% und Phosphazen-Oligomere mit k>= 8 von 0 bis 1 mol.-%, bezogen auf die Komponente C.

Mit n wird der gewichtete arithmetische Mittelwert von k gemäß folgender Formel definiert:

$$n = \frac{\sum_{i=1}^{max} k_i \cdot x_i}{\sum_{i=1}^{max} x_i}$$

Dabei ist $x_i$ der Anteil des Oligomers $k_i$ und es gilt also, dass die Summe aller $x_i$ gleich 1 ist.

In einer alternativen Ausführungsform ist n im Bereich von 1,10 bis 1,75, bevorzugt von 1,15 bis 1,50, weiter bevorzugt von 1,20 bis 1,45, und besonders bevorzugt von 1,20 bis 1,40 (Bereichsgrenzen eingeschlossen).

Die Phosphazene und deren Herstellung sind beispielsweise in EP-A 728 811, DE-A 1 961668 und WO 97/40092 beschrieben.

Die Oligomer-Zusammensetzungen der Phosphazene in den jeweiligen Blendproben lassen sich auch nach Compoundieren mittels $^{31}P$ NMR nachweisen und quantifizieren (chemische Verschiebung; $\delta$ trimer: 6,5 bis 10,0 ppm; $\delta$ tetramer: -10 bis -13,5 ppm; $\delta$ höhere Oligomere: -16,5 bis -25,0 ppm).

Komponente D

Die Komponente D umfasst ein oder mehrere thermoplastische Vinyl(Co)Polymerisate oder Polyalkylenterephthalate.

Geeignet als Vinyl(Co)Polymerisate D sind Polymerisate von mindestens einem Monomeren aus der Gruppe der Vinylaromaten, Vinylcyanide (ungesättigte Nitrile), (Meth)Acrylsäure-($C_1$-$C_8$)-Alkylester, ungesättigte Carbonsäuren sowie Derivate (wie Anhydride und Imide) ungesättigter Carbonsäuren. Insbesondere geeignet sind (Co)Polymerisate aus

D.1 50 bis 99, vorzugsweise 60 bis 80 Gew.-Teilen Vinylaromaten und/oder kernsubstituierten Vinylaromaten wie Styrol, $\alpha$ -Methylstyrol, p-Methylstyrol, p-Chlorstyrol) und/oder (Meth)Acrylsäure-($C_1$-$C_8$)-Alkylester, wie Methylmethacrylat, Ethylmethacrylat), und

D.2 1 bis 50, vorzugsweise 20 bis 40 Gew.-Teilen Vinylcyanide (ungesättigte Nitrile) wie Acrylnitril und Methacrylnitril und/oder (Meth)Acrylsäure-($C_1$-$C_8$)-Alkylester, wie Methylmethacrylat, n-Butylacrylat, t-Butylacrylat, und/oder ungesättigte Carbonsäuren, wie Maleinsäure, und/oder Derivate, wie Anhydride und Imide, ungesättigter Carbonsäuren, beispielsweise Maleinsäureanhydrid und N-Phenylmaleinimid).

Die Vinyl(co)polymerisate D sind harzartig, thermoplastisch und kautschukfrei. Besonders bevorzugt ist das Copolymerisat aus D.1 Styrol und D.2 Acrylnitril.

Die (Co)Polymerisate gemäß D sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000 g/mol, besonders bevorzugt zwischen 100.000 und 150.000 g/mol.

In einer besonders bevorzugten Ausführungsform ist D ein Copolymerisat aus 77 Gew.-% Styrol und 23 Gew.-% Acrylnitril mit einem gewichtsgemittelten Molekulargewicht $M_w$ von 130.000 g/mol.

Geeignet als Komponente D enthalten die Zusammensetzungen erfindungsgemäß ein oder eine Mischung aus zwei oder mehr unterschiedlichen Polyalkylenterephthalaten.

Polyalkylenterephthalate im Sinne der Erfindung sind Polyalkylenterephthalate, die sich von Terephthalsäure (oder ihren reaktionsfähigen Derivaten, z.B. Dimethylestern oder Anhydriden) und Alkandiolen, cycloaliphatischen oder araliphatischen Diolen und Mischungen daraus, beispielsweise auf Basis von Propylenglycol, Butandiol, Pentandiol, Hexandiol, 1,2-Cyclohexandiol, 1,4-Cyclohexandiol, 1,3-Cyclohexandiol, und Cyclohexyldimethanol, ableiten, wobei die erfindungsgemäße Diolkomponente mehr als 2 Kohlenstoffatome aufweist. Demgemäß werden als Komponente D bevorzugt Polybutylenterephthalat und/oder Polytrimethylenterephthalat, am meisten bevorzugt Polybutylenterephthalat eingesetzt.

Die erfindungsgemäßen Polyalkylenterephthalate können als Monomer der Disäure auch bis zu 5 Gew.-% Isophthalsäure enthalten.

Bevorzugte Polyalkylenterephthalate lassen sich aus Terephthalsäure (oder ihren reaktionsfähigen Derivaten) und aliphatischen oder cycloaliphatischen Diolen mit 3 bis 21 C-Atomen nach bekannten Methoden herstellen (Kunststoff-Handbuch, Bd. VIII, S. 695 FF, Carl-Hanser-Verlag, München 1973).

Bevorzugte Polyalkylenterephthalate enthalten mindestens 80, vorzugsweise mindestens 90 Mol.-%, bezogen auf die Diolkomponente, Propandiol-1,3- und/oder Butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure, Cyclohexandicarbonsäure.

Die bevorzugten Polyalkylenterephthalate können neben Propandiol-1,3- bzw. Butandiol-1,4-resten bis zu 20 Mol.-% anderer aliphatischer Diole mit 3 bis 12 C-Atomen oder cycloaliphatischer Diole mit 6 bis 21 C-Atomen enthalten, z.B. Reste von 2-Ethylpropan-1,3-diol, Neopentylglykol, 1,5-Pentan-diol, 1,6-Hexandiol, Cyclohexan-1,4-dimethanol, 3-Methylpentan-2,4-diol, 2-Methyl-pentan-2,4-diol, 2,2,4-Trimethylpentan-1,3-diol und 2-Ethylhexan-1,6-diol, 2,2-Diethylpropan-1,3-diol, 2,5-Hexandiol, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-ß-hydroxyethoxyphenyl)-propan und 2,2-bis-(4-hydroxypropoxyphenyl)-propan (DE-A 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäuren, wie sie z.B. in der DE-A 19 00 270 und der US-A 3 692 744 beschrieben sind, verzweigt werden. Beispiele für bevorzugte Verzweigungsmittel sind Trimesinsäure, Trimellitsäure, Trimethylolethan und -propan und Pentaerythrit.

Es ist ratsam, nicht mehr als 1 Mol.-% des Verzweigungsmittels, bezogen auf die Säurekomponente, zu verwenden.

Besonders bevorzugt sind Polyalkylenterephthalate, die allein aus Terephthalsäure oder deren reaktionsfähigen Derivaten (z.B. deren Dialkylestern wie Dimethylterephthalat) und Propandiol-1,3 und/oder Butandiol-1,4 hergestellt worden sind (Polypropylen- und Polybutylenterephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(propylenglykol-1,3/butandiol-1,4)-terephthalate.

Die Polyalkylenterephthalate besitzen im Allgemeinen eine intrinsische Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

In einer alternativen Ausführungsform können die erfindungsgemäß hergestellten Polyester auch im Gemisch mit anderen Polyestern und/oder weiteren Polymeren eingesetzt werden, wobei hier bevorzugt Gemische von Polyalkylenterephthalaten mit anderen Polyestern eingesetzt werden.

Weitere Additive E

Die Zusammensetzung kann weitere übliche Polymeradditive wie Flammschutzsynergisten außer Antidrippingmittel, Gleit- und Entformungsmittel (beispielsweise Pentaerythrittetrastearat), Nukleiermittel, Stabilisatoren (beispielsweise UV/Licht-Stabilisatoren, Thermostabilisatoren, Antioxidantien, Umesterungsinhibitoren, Hydrolyseschutzmittel), Antistatika (beispielsweise Leitruße, Carbonfasern, Carbon Nanotubes sowie organische Antistatika wie Polyalkylenether, Alkyl Sulfonate oder Polyamid-haltige Polymere) sowie Farbstoffe, Pigmente, Füll- und Verstärkungsstoffe, insbesondere Glasfasern, mineralische Verstärkungsstoffe und Carbonfasern, enthalten.

Als Stabilisatoren werden bevorzugt sterisch gehinderte Phenole und Phosphite oder deren Gemische, wie beispielsweise Irganox® B900 (Ciba Speciality Chemicals), verwendet. Pentaerythrittetrastearat wird bevorzugt als Entformungsmittel verwendet. Weiterhin wird vorzugsweise Ruß als Schwarzpigment (z.B. Blackpearls) zugesetzt.

Besonders bevorzugte Formmassen enthalten als Komponente E neben optionalen weiteren Additiven ein Entformungsmittel, besonders bevorzugt Pentaerythrittetrastearat, in 0,1 bis 1,5 Gew.-Teilen, vorzugsweise 0,2 bis 1,0 Gew.-Teile, besonders bevorzugt 0,3 bis 0,8 Gew.-Teilen. Besonders bevorzugte Formmassen enthalten als Komponente E neben optionalen weiteren Additiven mindestens einen Stabilisator, beispielsweise ausgewählt aus der Gruppe der sterisch gehinderten Phenole, Phosphite sowie Mischungen daraus und besonders bevorzugt Irganox® B900, in 0,01 bis 0,5 Gew.-Teilen, vorzugsweise 0,03 bis 0,4 Gew.-Teile, besonders bevorzugt 0,06 bis 0,3 Gew.-Teilen.

Weiterhin ist die Kombination aus PTFE (Komponente F), Pentaerythrittetrastearat und Irganox B900 mit einem phosphorbasiertem Flammschutzmittel, als Komponente C) besonders bevorzugt.

Komponente F

Insbesondere wird als Antidrippingmittel Polytetrafluorethylen (PTFE) oder PTFE-haltige Zusammensetzungen wie beispielsweise Masterbatche von PTFE mit styrol- oder methylmethacrylat enthaltenden Polymeren oder Copolymeren, als Pulver oder als koagulierte Mischung, z.B. mit Komponente B, eingesetzt.

Die als Antidrippingmittel eingesetzten fluorierten Polyolefine sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser $d_{50}$ von 0,05 bis 1000, vorzugsweise 0,08 bis 20 $\mu$m. Im allgemeinen haben die fluorierten Polyolefine eine Dichte von 1,2 bis 2,3 g/cm$^3$. Bevorzugte fluorierte Polyolefine sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluoropolymers" von Wall, Wiley-Interscience, John Wiley & Sons, Inc., New York, Band 13, 1970, Seite 623-654; "Modern Plastics Encyclopedia", 1970-1971, Band 47, No. 10 A, Oktober 1970, Mc Graw-Hill, Inc., New York, Seite 134 und 774; "Modern Plastics Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder

Ammoniumperoxidisulfat bei Drucken von 7 bis 71 $kg/cm^2$ und bei Temperaturen von 0 bis 200°C, vorzugsweise bei Temperaturen von 20 bis 100°C. (Nähere Einzelheiten s. z.B. US-Patent 2 393 967). Je nach Einsatzform kann die Dichte dieser Materialien zwischen 1,2 und 2,3 $g/cm^3$, die mittlere Teilchengröße zwischen 0,05 und 1000 μm liegen.

Die erfindungsgemäß bevorzugte fluorierte Polyolefine haben mittlere Teilchendurchmesser von 0,05 bis 20 μm, vorzugsweise 0,08 bis 10 μm, und eine Dichte von 1,2 bis 1,9 $g/cm^3$.

Geeignete, in Pulverform einsetzbare fluorierte Polyolefine F sind Tetrafluorethylenpolymerisate mit mittleren Teilchendurchmessern von 100 bis 1000 μm und Dichten von 2,0 $g/cm^3$ bis 2,3 $g/cm^3$. Geeignete Tetrafluorethylenpolymerisat-Pulver sind handelsübliche Produkte und werden beispielsweise von der Fa. DuPont unter dem Handelsnamen Teflon® angeboten.

Besonders bevorzugte flammgeschützte Zusammensetzungen enthalten als Komponente F neben optionalen weiteren Additiven ein fluoriertes Polyolefin in 0,05 bis 5,0 Gew.-Teilen, vorzugsweise 0,1 bis 2,0 Gew.-Teile, besonders bevorzugt 0,3 bis 1,0 Gew.-Teilen.

Die folgenden Beispiele dienen der weiteren Erläuterung der Erfindung.

## Komponente A

Lineares Polycarbonat auf Basis Bisphenol-A mit einem gewichtsgemittelten Molekulargewicht $\overline{M}_w$ von 27500 g/mol (bestimmt durch GPC in Dichlormethan mit Polycarbonat als Standard).

## Komponente B

ABS-Pfropfpolymerisat, hergestellt durch Emulsions-Polymerisation von 43 Gew.-% bezogen auf das ABS-Polymerisat einer Mischung aus 27 Gew.-% Acrylnitril und 73 Gew.-% Styrol in Gegenwart von 57 Gew.-% bezogen auf das ABS-Polymerisat eines teilchenförmig vernetzten Polybutadienkautschuks (mittlerer Teilchendurchmesser dso = 0,35 μm).

## Komponente C

Phenoxyphosphazen der Formel XI) mit einem Anteil an oligomere mit k = 1 von 40 bis 100 mol.-%, einem Anteil an oligomere mit k = 2 von 0 bis 35 mol.-% und einen Anteil an Oligomere mit k ≥ 3 von 0 bis 35 mol.-% wie in Tab. 1 angegeben.

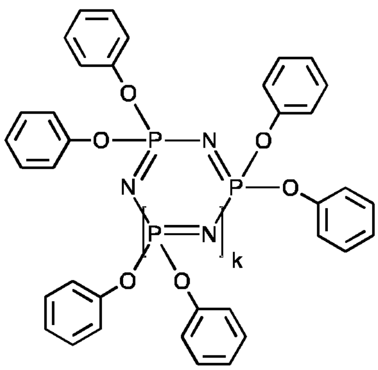

**(XI)**

| Beispiele | Bsp. 1 C1 | Bsp. 2 C2 | Bsp. 3 C3 | Bsp. 4 C4 | Bsp. 5 C5 | Bsp. 6 C6 |
|---|---|---|---|---|---|---|
| Anteil k=1 (mol.%) | 40,5 | 64,5 | 71,6 | 82,2 | 90,8 | 100,0 |
| Anteil k=2 (mol.%) | 30,8 | 21,3 | 18,6 | 11,1 | 6,1 | 0 |
| Anteil k≥3 (mol.%) | 28,6 | 14,1 | 9,8 | 6,7 | 3,2 | 0 |

## Komponente D

Copolymerisat aus 77 Gew.-% Styrol und 23 Gew.-% Acrylnitril mit einem gewichtsgemittelten Molekulargewicht Mw von 130 kg/mol (bestimmt durch GPC), hergestellt nach dem Masseverfahren.

**Komponente E1**

Pentaerythrittetrastearat als Gleit-/Entformungsmittel

**Komponente E2**

Thermostabilisator, Irganox® B900 (Gemisch aus 80% Irgafos® 168 und 20% Irganox® 1076; BASF AG; Ludwigshafen / Irgafos® 168 (Tris(2,4-di-tert-butyl-phenyl)-phosphit) / Irganox® 1076 (2,6-Di-tert-butyl-4-(octadecanoxycarbonylethyl)phenol)

**Komponente F**

Polytetrafluorethylen-Pulver, CFP 6000 N, Fa. Du Pont

**Herstellung und Prüfung der Formmassen**

Auf einem Zweischneckenextruder (ZSK-25) (Fa. Werner und Pfleiderer) werden die in Tabelle 2 aufgeführten Einsatzstoffe bei einer Drehzahl von 225 Upm und einem Durchsatz von 20 kg/h bei einer Maschinentemperatur von 260°C compoundiert und granuliert.
Die fertigen Granulate werden auf einer Spritzgussmaschine zu den entsprechenden Probekörpern verarbeitet (Massetemperatur 240°C, Werkzeugtemperatur 80°C, Fließfrontgeschwindigkeit 240 mm/s).
Zur Charakterisierung der Eigenschaften der Materialien wurden folgende Methoden angewandt:

Die **IZOD Kerbschlagzähigkeit** wurde gemessen nach ISO 180/1A an einseitig angespritzten Prüfstäben der Dimension 80 mm x10 mm x 4 mm.

Die **Bindenahtfestigkeit anF** wurde gemessen nach ISO 179/1eU an einem beidseitig angespritzten Prüfstab der Dimension 80x10x4 mm.

Das **Brandverhalten** wird nach UL 94V an Stäben der Abmessung 127 x 12,7 x 1,5 mm gemessen.

Der **Zug-Elastizitätsmodul** und die **Reißdehnung** wurde bestimmt nach ISO 527 an Schulterstäben der Geometrie 170 mm x 10 mm x 4 mm.

Die **Wärmeformbeständigkeit** wurde gemessen gemäß ISO 306 (Vicat-Erweichungstemperatur, Verfahren B mit 50 N Belastung und einer Heizrate von 120 K/h) an einseitig angespritzten Prüfstäben der Dimension 80 mm x10 mm x 4 mm.

Das **Spannungsrißverhalten (ESC-Verhalten)** wurde an Stäben der Abmessung 80 x 10 x 4 mm, Verarbeitungstemperatur 240°C, untersucht. Als Testmedium wurde Rapsöl verwendet. Die Probekörper wurden mittels einer Kreisbogenschablone vorgedehnt (Vordehnung in Prozent) und bei Raumtemperatur im Testmedium gelagert. Das Spannungsrißverhalten wurde als Zeit bis zur Rißbildung bzw. den Bruch im Testmedium ausgewertet.

Die **Schmelzefließfähigkeit** wurde beurteilt anhand der Schmelzevolumenfließrate (MVR) gemessen gemäß ISO 1133 bei einer Temperatur von 240°C und mit einer Stempellast von 5 kg.

Als Maß für die **Hydrolysebeständigkeit** der hergestellten Zusammensetzungen diente die Änderung des MVR gemessen nach ISO 1133 bei 240°C mit einer Stempellast von 5 kg bei einer 7-tägigen Lagerung des Granulats bei 95°C und 100% relativer Luftfeuchte ("FWL-Lagerung"). Dabei wurde der Anstieg des MVR-Wertes gegenüber dem MVR-Wert vor der entsprechenden Lagerung als ΔMVR(hydr.), welcher sich durch nachstehende Formel definiert, berechnet.

$$\Delta MVR(hydr.) = \frac{MVR(nach\,FWL-Lagerung) - MVR(vor\,Lagerung)}{MVR(vor\,Lagerung)} \bullet 100\%$$

Aus Tabelle 2 ist ersichtlich, dass die anmeldungsgemäßen Zusammensetzungen der Beispiele 3 und 4 die erfindungsgemäße Aufgabe lösen, d.h. eine Kombination aus guter Hydrolysestabilität (≤ 65% Abweichung vom Ausgangswert des MVR 240°C/5kg nach Lagerung für 7d / 95 °C/ 100% rel. Luftfeuchtigkeit), chemische Bestandigkeit (Rissbildung und/oder Bruch der Teststäbe nach ≥ 6 Stunden), Temperaturstabilität, und E-Modul, aufweisen, bei einer UL94V-0 Klassifizierung bei 1,5 mm.

**Tabelle 2:** Zusammensetzung und Eigenschaften der Formmassen

| **Komponenten (Gew.-Teile)** | Bsp. 1 (Vgl.) | Bsp. 2 | Bsp. 3 | Bsp. 4 | Bsp. 5 | Bsp. 6 (Vgl.) |
|---|---|---|---|---|---|---|
| A | 81,6 | 81,6 | 81,6 | 81,6 | 81,6 | 81,6 |
| B | 5,0 | 5,0 | 5,0 | 5,0 | 5,0 | 5,0 |
| C1 | 7,5 | | | | | |
| C2 | | 7,5 | | | | |
| C3 | | | 7,5 | | | |
| C4 | | | | 7,5 | | |
| C5 | | | | | 7,5 | |
| C6 | | | | | | 7,5 |
| D | 5,0 | 5,0 | 5,0 | 5,0 | 5,0 | 5,0 |
| F | 0,4 | 0,4 | 0,4 | 0,4 | 0,4 | 0,4 |
| E1 | 0,4 | 0,4 | 0,4 | 0,4 | 0,4 | 0,4 |
| E2 | 0,1 | 0,1 | 0,1 | 0,1 | 0,1 | 0,4 |
| Trimer-Anteil in Phosphazene (Mol%) | **40,5** | **64,5** | **71,6** | **82,2** | **90,8** | **100,0** |
| **Eigenschaften** | | | | | | |
| Vicat B 120 | 124 | 124 | 124 | 122 | 121 | 122 |
| UL 94 V bei 1,5 mm (7d/70°C) Dicke/ Gesamtnachbrennzeit | V-0/10s | V-0/10s | V-0/10s | V-0/10s | V-0/12s | V-0/11s |
| MVR 240°C/5kg [ccm/10 min] | 7,70 | 7,50 | 8,50 | 7,80 | 9,20 | 8,80 |
| MVR 240°C/5kg nach Hydrolyse (7d/95°C/99%RH) [ccm/10 min] | 13,50 | 12,30 | 12,50 | 12,70 | 15,10 | 14,30 |
| delta MVR nach Hydrolyse [%] | 75,3 | 64,0 | 47,0 | 62,8 | 64,1 | 62,5 |
| E-modulus [N/mm$^2$] | 2318 | 2334 | 2351 | 2382 | 2376 | 2326 |
| Reißfestigkeit [N/mm$^2$] | 53,4 | 55,9 | 54,3 | 56,9 | 55,7 | 57 |
| IZOD-Kerbschlag [kJ/m$^2$] | 62,6 | 63,3 | 64,1 | 63,9 | 64,4 | 64,5 |
| Bindenahtfestigkeit [kJ/m$^2$] | 11,5 | 11,9 | 11,9 | 12,2 | 12,6 | 12,8 |
| ESC-Test (Rapsöl), 2,4% Randfaserdehnung, Zeit zum Bruch [min] | 390 | 390 | 420 | 420 | 300 | 280 |

## Patentansprüche

**1.** Zusammensetzungen enthaltend

A) 60 - 95 Gew.-Teile aromatisches Polycarbonat und/oder aromatisches Polyestercarbonat,
B) 1,0 - 15,0 Gew.-Teile kautschukmodifiziertes Pfropfpolymerisat,
C) 1,0 - 14,5 Gew.-Teile, mindestens eines cyclischen Phosphazens, gemäß Formel (X)

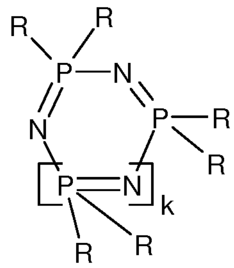

(X),

wobei

k für 1 oder eine ganze Zahl von 1 bis 10, vorzugsweise für eine Zahl von 1 bis 8, besonders bevorzugt 1 bis 5, steht,

wobei der Trimerenanteil (k=1) von 65 bis 85 mol.-%, der Tetramerenanteil (k=2) von 10 bis 20 mol.-%, der Anteil an höheren oligomeren Phosphazene (k=3,4,5,6 und 7) von 5 bis 15 mol.-%, und der Anteil an Phosphazen-Oligomere mit k>= 8 von 0 bis 1 mol.-%, jeweils bezogen auf die Komponente C, beträgt
und wobei
R
jeweils gleich oder verschieden ist und für einen Aminrest, jeweils, gegebenenfalls halogeniertes, vorzugsweise mit Fluor halogeniertes, $C_1$- bis $C_8$-Alkyl, vorzugsweise Methyl, Ethyl, Propyl oder Butyl, $C_1$- bis $C_8$- Alkoxy, vorzugsweise Methoxy, Ethoxy, Propoxy oder Butoxy, jeweils gegebenenfalls durch Alkyl, vorzugsweise $C_1$-$C_4$-Alkyl, und/oder Halogen, vorzugsweise Chlor und/oder Brom, substituiertes $C_5$- bis $C_6$-Cycloalkyl, jeweils gegebenenfalls durch Alkyl, vorzugsweise $C_1$-$C_4$-Alkyl, und/oder Halogen, vorzugsweise Chlor, Brom und/oder Hydroxy-substituiertes, $C_6$- bis $C_{20}$-Aryloxy, vorzugsweise Phenoxy, Naphthyloxy, jeweils gegebenenfalls durch Alkyl, vorzugsweise $C_1$-$C_4$-Alkyl, und/oder Halogen, vorzugsweise Chlor und/oder Brom, substituiertes $C_7$- bis $C_{12}$-Aralkyl, vorzugsweise Phenyl-$C_1$-$C_4$-alkyl, oder einen Halogen-Rest, vorzugsweise Chlor, oder einen OH-Rest steht.
D) 0 - 15,0 Gew.-Teile kautschukfreies Vinyl(Co)Polymerisat oder Polyalkylenterephthalat,
E) 0 - 15,0 Gew.-Teile Additive ausgewählt aus der Gruppe, die Gleit- und Entformungsmittel, Nukleiermittel, Stabilisatoren, Antistatika, Farbstoffe, Pigmente, Füll- und Verstärkungsstoffe sowie Flammschutzsynergisten außer Antidrippingmittel umfasst,
F) 0,05 bis 5,00 Gew.-Teilen, vorzugsweise 0,1 bis 2,0 Gew.-Teile, besonders bevorzugt 0,1 bis 1,0 Gew.-Teilen Antidrippingmittel, wobei alle Gewichtsteilangaben vorzugsweise so normiert sind, dass die Summe der Gewichtsteile aller Komponenten A+B+C+D+E+F in der Zusammensetzung 100 ergibt.

2. Zusammensetzungen nach Anspruch 1, **dadurch gekennzeichnet, dass** der Anteil der Komponente C 4,5 - 8,0 Gew.-Teile beträgt.

3. Zusammensetzungen nach einem der vorhergehenden Ansprüche, **dadurch gekennzeichnet, dass** die Komponente C ausgewählt ist aus der Gruppe, die Propoxyphosphazene, Phenoxyphosphazene, Methylphenoxyphosphazene, Aminophosphazene und Fluoralkylphosphazene umfaßt.

4. Zusammensetzungen nach einem der vorhergehenden Ansprüche, **dadurch gekennzeichnet, dass** R = Phenoxy ist.

5. Zusammensetzungen nach Anspruch 1, **dadurch gekennzeichnet**, der Anteil der Trimeren (k=1) 70 - 85 mol.-%, bezogen auf die Komponente C beträgt.

6. Zusammensetzungen nach einem der vorhergehenden Ansprüche, **dadurch gekennzeichnet, dass** Komponente D in einem Anteil von 2,0 - 12,5 Gew.-Teilen enthalten ist.

7. Zusammensetzungen nach einem der vorhergehenden Ansprüche, **dadurch gekennzeichnet, dass** die thermoplastischen, aromatischen Polycarbonate ein mittleres Molekulargewicht (Gewichtsmittel) von 22.000 bis 30.000 g/mol aufweisen.

8. Zusammensetzungen nach einem der vorhergehenden Ansprüche, **dadurch gekennzeichnet, dass** die Pfropfgrundlage der Komponente B ausgewählt ist aus der Gruppe, die Dienkautschuke, EP(D)M-Kautschuke, Acrylat-, Polyurethan-, Chloropren und Ethylen/Vinylacetat-Kautschuke umfaßt.

**9.** Verwendung der Zusammensetzungen nach einem der Ansprüche 1 bis 8 zur Herstellung von spritzgegossenen oder thermogeformten Formkörpern.

**10.** Formkörper erhältlich aus Zusammensetzungen gemäß einem der Ansprüche 1-8.

## Claims

**1.** Compositions comprising

A) 60 - 95 parts by weight aromatic polycarbonate and/or aromatic polyester carbonate,
B) 1.0 - 15.0 parts by weight rubber-modified graft polymer,
C) 1.0 - 14.5 parts by weight of at least one cyclic phosphazene according to formula (X)

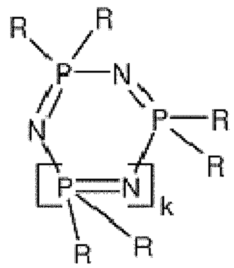

(X),

wherein
k is 1 or an integer from 1 to 10, preferably a number from 1 to 8, particularly preferably 1 to 5,
wherein the proportion of trimers (k=1) is from 65 to 85 mol%, the proportion of tetramers (k=2) is from 10 to 20 mol%, the proportion of higher oligomeric phosphazenes (k=3, 4, 5, 6 and 7) is from 5 to 15 mol%, and the proportion of phosphazene oligomers where k ≥ 8 is from 0 to 1 mol%, based in each case on component C, and wherein
R
is in each case the same or different and is an amine radical; $C_1$- to $C_8$-alkyl, preferably methyl, ethyl, propyl or butyl, in each case optionally halogenated, preferably halogenated with fluorine; $C_1$- to $C_8$-alkoxy, preferably methoxy, ethoxy, propoxy or butoxy; $C_5$- to $C_6$-cycloalkyl in each case optionally substituted by alkyl, preferably $C_1$- to $C_4$-alkyl and/or halogen, preferably chlorine and/or bromine; $C_6$- to $C_{20}$-aryloxy, preferably phenoxy, naphthyloxy, in each case optionally substituted by alkyl, preferably $C_1$- to $C_4$-alkyl, and/or halogen, preferably chlorine, bromine, and/or hydroxyl; $C_7$- to $C_{12}$-aralkyl, preferably phenyl-$C_1$-$C_4$-alkyl, in each case optionally substituted by alkyl, preferably $C_1$-$C_4$-alkyl, and/or halogen, preferably chlorine and/or bromine; or a halogen radical, preferably chlorine, or an OH radical,
D) 0 - 15.0 parts by weight rubber-free vinyl (co)polymer or polyalkylene terephthalate,
E) 0 - 15.0 parts by weight additives selected from the group comprising lubricants and demoulding agents, nucleating agents, stabilizers, antistatics, dyes, pigments, fillers and reinforcing agents and also flame retardant synergists other than anti-dripping agents,
F) 0.05 to 5.00 parts by weight, preferably 0.1 to 2.0 parts by weight, particularly preferably 0.1 to 1.0 parts by weight anti-dripping agent, wherein all parts by weight figures are preferably normalized such that the sum total of the parts by weight of all components A+B+C+D+E+F in the composition add up to 100.

**2.** Compositions according to Claim 1, **characterized in that** the proportion of component C is 4.5 - 8.0 parts by weight.

**3.** Compositions according to either of the preceding claims, **characterized in that** component C is selected from the group comprising propoxyphophazenes, phenoxyphosphazenes, methylphenoxyphosphazenes, aminophosphazenes and fluoroalkylphosphazenes.

**4.** Compositions according to any of the preceding claims, **characterized in that** R = phenoxy.

**5.** Compositions according to Claim 1, **characterized in that** the proportion of trimers (k=1) is 70-85 mol%, based on component C.

**6.** Compositions according to any of the preceding claims, **characterized in that** component D is present at a proportion of 2.0-12.5 parts by weight.

**7.** Compositions according to any of the preceding claims, **characterized in that** the thermoplastic aromatic polycarbonates have an average molecular weight (weight average) of 22 000 to 30 000 g/mol.

**8.** Compositions according to any of the preceding claims, **characterized in that** the graft base of component B is selected from the group comprising diene rubbers, EP(D)M rubbers, acrylate, polyurethane, chloroprene and ethylene/vinyl acetate rubbers.

**9.** Use of the compositions according to any of Claims 1 to 8 for producing injection-moulded or thermoformed mouldings.

**10.** Mouldings obtainable from compositions according to any of Claims 1-8.

## Revendications

**1.** Compositions contenant

A) 60 à 95 parties en poids de polycarbonate aromatique et/ou de polyestercarbonate aromatique,
B) 1,0 à 15,0 parties en poids de polymère greffé modifié par un caoutchouc,
C) 1,0 à 14,5 parties en poids d'au moins un phosphazène cyclique, selon la formule (X)

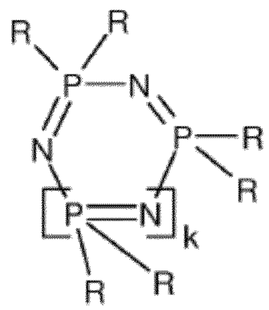

(X),

k représentant 1 ou un nombre entier de 1 à 10, de préference un nombre de 1 à 8, particulièrement préférablement de 1 à 5,
la proportion de trimères (k = 1) étant de 65 à 85% en moles, la proportion de tétramères (k = 2) étant de 10 à 20% en moles, la proportion en phosphazènes plus oligomériques (k = 3, 4, 5, 6 et 7) étant de 5 à 15% en moles, et la proportion en oligomères de phosphazène où k ≥ 8 étant de 0 à 1% en moles, à chaque fois par rapport au composant C,
et
R
étant à chaque fois identique ou différent et représentant un radical amine, à chaque fois, $C_{1-8}$-alkyle éventuellement halogéné, de préférence halogéné par le fluor, de préférence méthyle, éthyle, propyle ou butyle, $C_{1-8}$-alcoxyle, de préférence méthoxyle, éthoxyle, propoxyle ou butoxyle, $C_{5-6}$-cycloalkyle à chaque fois éventuellement substitué par alkyle, de préférence $C_{1-4}$-alkyle, et/ou halogène, de préférence chlore et/ou brome, $C_{6-20}$-aryloxyle à chaque fois éventuellement substitué par alkyle, de préférence $C_{1-4}$-alkyle, et/ou halogène, de préférence chlore, brome et/ou hydroxyle, de préférence phénoxyle, naphtyloxyle, $C_{7-12}$-aralkyle, de préférence à chaque fois éventuellement substitué par alkyle, de préférence $C_{1-4}$-alkyle, et/ou halogène, de préférence chlore et/ou brome, de préférence phényl-$C_{1-4}$-alkyle, ou un radical halogène, de préférence chlore, ou un radical OH.
D) 0 à 15, 0 parties en poids de (co)polymère vinylique sans caoutchouc ou de poly(téréphtalate d'alkylène),
E) 0 à 15,0 parties en poids d'additifs choisis dans le groupe qui comprend des lubrifiants et des agents de démoulage, des agents de nucléation, des stabilisants, des agents antistatiques, des colorants, des pigments, des charges et des matières de renforcement, des synergistes d'ignifugation mis à part des agents antigoutte,

F) 0,05 à 5,00 parties en poids, de préférence 0,1 à 2,0 parties en poids, particulièrement préférablement 0,1 à 1,0 partie en poids d'agent antigoutte,

toutes les données de parties en poids étant de préférence ainsi standardisées, que la somme des parties en poids de tous les composants A + B + C + D + E + F dans la composition est de 100.

**2.** Compositions selon la revendication 1, **caractérisées en ce que** la proportion du composant C est de 4,5 à 8 parties en poids.

**3.** Compositions selon l'une quelconque des revendications précédentes, **caractérisées en ce que** le composant C est choisi dans le groupe qui comprend les propoxyphosphazènes, les phénoxyphosphazènes, les méthylphénoxyphosphazènes, les aminophosphazènes et les fluoroalkylphosphazènes.

**4.** Compositions selon l'une quelconque des revendications précédentes, **caractérisées en ce que** R = phénoxyle.

**5.** Compositions selon la revendication 1, **caractérisées en ce que** la proportion de trimères (k = 1) est de 70 à 85% en moles, par rapport au composant C.

**6.** Compositions selon l'une quelconque des revendications précédentes, **caractérisées en ce qu'**elles contiennent le composant D en une proportion de 2,0 à 12,5 parties en poids.

**7.** Compositions selon l'une quelconque des revendications précédentes, **caractérisées en ce que** les polycarbonates aromatiques thermoplastiques présentent un poids moléculaire moyen (moyenne en poids) de 22.000 à 30.000 g/mole.

**8.** Compositions selon l'une quelconque des revendications précédentes, **caractérisées en ce que** la base de greffage du composant B est choisie dans le groupe qui comprend les caoutchoucs diéniques, les caoutchoucs EP(D)M et les caoutchoucs acrylate/acétate de vinyle, polyuréthane/acétate de vinyle, chloropropène/acétate de vinyle et éthylène/acétate de vinyle.

**9.** Utilisation des compositions selon l'une quelconque des revendications 1 à 8 pour la préparation d'articles moulés thermoformés ou moulés par injection.

**10.** Articles moulés pouvant être obtenus à partir de compositions selon l'une quelconque des revendications 1 à 8.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1095099 A1
- EP 1196498 A1
- EP 1095100 A1
- EP 1095097 A1
- US 2003040643 A1
- EP 0728811 A2
- JP 2000351893 A
- US 2003092802 A1
- JP 2004155802 A
- JP 7038462 A
- JP 19990176718 B
- DE AS1495626 B
- DE 2232877 A
- DE 2703376 A
- DE 2714544 A
- DE 3000610 A
- DE 3832396 A
- DE 3007934 A
- DE 2842005 A
- US 3419634 A
- DE 3334782 A
- DE 2940024 A
- DE OS2035390 A
- US PS3644574 A
- DE OS2248242 A
- GB PS1409275 A
- DE OS1694173 A
- US PS3564077 A
- DE OS2348377 A
- US PS3919353 A
- EP 728811 A
- DE 1961668 A
- WO 9740092 A
- DE 2407674 A
- DE 2407776
- DE 2715932
- DE 1900270 A
- US 3692744 A
- US PS3671487 A
- US 3723373 A
- US 3838092 A
- US 2393967 A


### In der Beschreibung aufgeführte Nicht-Patentliteratur


- Methoden der Organischen Chemie” (Houben-Weyl). Georg Thieme-Verlag, 1961, vol. 14/1, 393-406
- **C.B. BUCKNALL.** Toughened Plastics. Appl. Science Publishers, 1977
- **ULLMANNS.** Enzyklopädie der Technischen Chemie. 1980, vol. 19, 280 ff
- **M. HOFFMANN ; H. KRÖMER ; R. KUHN.** Polymeranalytik I und II. Georg Thieme-Verlag, 1977
- **W. SCHOLTAN ; H. LANGE.** *Kolloid, Z. und Z. Polymere,* 1972, vol. 250, 782-796
- Kunststoff-Handbuch. Carl-Hanser-Verlag, 1973, vol. VIII, 695 FF
- **SCHILDKNECHT.** Vinyl and Related Polymers. John Wiley & Sons, Inc, 1962, 484-494
- **WALL.** Fluoropolymers. Wiley-Interscience, John Wiley & Sons, Inc, 1970, vol. 13, 623-654
- Modern Plastics Encyclopedia. Mc Graw-Hill, Inc, Oktober 1970, vol. 47, 134, , 774
- Modern Plastics Encyclopedia. Mc Graw-Hill, Inc, Oktober 1975, vol. 52, 27, , 28, , 472